(19) Europäisches Patentamt
European Patent Office
Office européen des brevets

(11) **EP 4 332 641 B1**

(12) **EUROPEAN PATENT SPECIFICATION**

(45) Date of publication and mention
of the grant of the patent:
**03.06.2026 Bulletin 2026/23**

(21) Application number: **23188589.8**

(22) Date of filing: **31.07.2023**

(51) International Patent Classification (IPC):
***G02B 1/115*** *(2015.01)*

(52) Cooperative Patent Classification (CPC):
**G02B 1/115;** G02B 1/00; G02B 5/208;
G02B 13/0045

(54) **LENS AND LENS MODULE INCLUDING LENS**

LINSE UND LINSENMODUL MIT LINSE

LENTILLE ET MODULE DE LENTILLE COMPRENANT UNE LENTILLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **31.08.2022 KR 20220110190
21.04.2023 KR 20230052586**

(43) Date of publication of application:
**06.03.2024 Bulletin 2024/10**

(73) Proprietor: **Samsung Electro-Mechanics Co., Ltd.
Suwon-si, Gyeonggi-do (KR)**

(72) Inventors:
• **Kim, Hyuk Joo**
**Suwon-si, Gyeonggi-do (KR)**
• **Chae, Kyu Min**
**Suwon-si, Gyeonggi-do (KR)**

(74) Representative: **Grünecker Patent- und
Rechtsanwälte
PartG mbB
Leopoldstraße 4
80802 München (DE)**

(56) References cited:
CN-A- 112 114 389      US-A1- 2005 195 503
US-A1- 2012 188 647      US-A1- 2013 057 950

**Description**

BACKGROUND

1. Field

The present disclosure relates to a lens and a lens module including a lens.

2. Description of Related Art

A camera module for monitoring may be installed in a building or a vehicle and may be configured to capture an image of the surrounding environment. For example, a small-sized camera module may be installed on the front, rear, and side surfaces of a vehicle and may capture images of surrounding objects and vehicles in real time, thereby enabling safe driving and autonomous driving of a vehicle.

A camera module may include a lens made of plastic to facilitate miniaturization and manufacturing. For example, one or more lenses among a plurality of lenses included in a camera module may be made of plastic. However, since a lens made of plastic may be easily deteriorated by sunlight, a camera module constantly exposed to the outside, such as a camera module for self-driving vehicles, may experience deterioration of resolution over time. As a specific example, since a plastic lens may be easily yellowed by ultraviolet light, the resolution of a camera module including a plastic lens may decrease after a lens has been exposed to ultraviolet light for an elongated period of time.

US 2005/195503 A1 refers to a digital camera with anti-fouling lens adhesion. A digital camera module for a portable electronic device includes a barrel containing a first lens and a second lens, a holder containing part of the barrel, and an image sensor below the first and second lenses. The first and second lenses are adhered in the barrel by an ultraviolet, UV, adhesive. The UV adhesive is cured between 75° Celsius and 100° Celsius for 20 to 30 minutes, and is volatilized little. The image sensor is packaged with a Ceramic Leaded Chip Carrier. The structure of the digital camera module can effectively protect the first and second lenses thereof from moisture, dampness, and oxidation.

US 2012/188647 A1 refers to a zoom lens system, optical apparatus, and method for manufacturing zoom lens system. In order from an object side along an optical axis, the lens system comprises a first lens group having positive refractive power; a second lens group having negative refractive power; a third lens group having positive refractive power; a fourth lens group having negative refractive power; and a fifth lens group having positive refractive power, upon zooming from a wide-angle end state to a telephoto end state, the first lens group being moved with respect to an image plane, a distance between the first lens group and the second lens group increasing, a distance between the second lens group and the third lens group decreasing, a distance between the third lens group and the fourth lens group varying, and a distance between the fourth lens group and the fifth lens group varying, and a given conditional expression being satisfied, thereby providing a zoom lens system having sufficiently high optical performance.

CN 122 144 389 A refers to a heat-insulating antireflection film as well as preparation method and application thereof. The heat-insulating antireflection film comprises an all-dielectric antireflection film system 1, a composite near-infrared reflection film system and an all-dielectric antireflection film system 2 which are arranged in sequence, wherein the composite near-infrared reflection film system is composed of a near-infrared reflecting film and all-dielectric transition films wrapping the two sides of the near-infrared reflecting film. The heat-insulating antireflection film realizes a thermal insulation effect on a near-infrared band, protects instrument work or human eyes from being interfered by heat accumulation, greatly prolongs the service life of corresponding lenses or elements, realizes high visible light transmittance of a film layer, is low in cost and simple and convenient in preparation process, and has a wide application value.

SUMMARY

The invention is what is claimed in the independent claims.

Preferred embodiments are specified in the dependent claims.

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

According to the present invention, a lens includes a lens unit having a refractive power; and a first coating layer and a second coating layer formed on either one or both of an object-side surface and an image-side surface of the lens unit in an optical axis direction of the lens unit, wherein a first refractive index of the first coating layer is greater than a second refractive index of the second coating layer.

The first refractive index may be greater than a refractive index of the lens unit.

The second refractive index may be smaller than a refractive index of the lens unit.

The first refractive index may be in a range of 2.0 to 2.7.

The second refractive index may be in a range of 1.01 to 1.50.

The first coating layer may be made of a material including any one or any combination of any two or more of $TiO_2$, $Ti_3O_5$, and $Si_3N_4$.

The second coating layer may be made of a material including either one or both of $SiO_2$ and $Al_2O_3$.

The first coating layer may include a plurality of coating layers made of $TiO_2$, and the second coating layer may include a plurality of coating layers made of $SiO_2$.

The first coating layer may include a plurality of coating layers made of $Ti_3O_5$, and the second coating layer may include a plurality of coating layers made of $SiO_2$.

The first coating layer may include a plurality of coating layers made of $Si_3N_4$, and the second coating layer may include a plurality of coating layers made of $SiO_2$.

The first coating layer may include a plurality of coating layers made of $TiO_2$, and the second coating layer may include a plurality of coating layers made of $SiO_2$ and a plurality of coating layers made $Al_2O_3$.

The first coating layer includes a plurality of coating layers, and the second coating layer includes a plurality of coating layers alternately stacked with the coating layers of the first coating layer in the optical axis direction of the lens unit.

The coating layers of the first coating layer may include coating layers having at least two different thicknesses, and the coating layers of the second coating layer may include coating layers having at least two different thicknesses.

According to the present invention, a total number of the coating layers of the first coating layer and the coating layers of the second coating layer is in a range of 10 to 30 coating layers.

According to the present invention, the first coating layer and the second coating layer are alternately disposed in the optical axis direction of the lens unit.

The conditional expression T1sum < T2sum may be satisfied, where T1sum is a total thickness of the first coating layer, and T2sum is a total thickness of the second coating layer.

The conditional expression $0.2000 \leq T1sum/T2sum \leq 0.3000$ may be satisfied, where T1sum is a total thickness of the first coating layer, and T2sum is a total thickness of the second coating layer.

According to the present invention, the conditional expression 0.1900 < T1sum/(T1sum+T2sum) < 0.2100 is satisfied, where T1 sum is a total thickness of the first coating layer, and T2sum is a total thickness of the second coating layer.

According to the present invention, a lens module includes the lens described above.

The lens module may further include a rear lens group disposed on an image side of the lens.

The rear lens group may include one or more plastic lenses.

The lens module may further include a front lens group disposed on an object side of the lens.

The front lens group may include one or more glass lenses.

Other features and aspects will be apparent from the following detailed description, the drawings, and the claims.

BRIEF DESCRIPTION OF DRAWINGS

FIG. 1 is a perspective diagram illustrating a lens according to an embodiment of the present disclosure.

FIG. 2 is a cross-sectional diagram illustrating a lens illustrated in FIG. 1 taken along the line II-II' in FIG. 1.

FIG. 3 is an enlarged cross-sectional diagram illustrating portion A illustrated in FIG. 2.

FIG. 4 is a diagram illustrating a lens module according to an embodiment of the present disclosure.

FIG. 5 is a diagram illustrating a lens module according to another embodiment of the present disclosure.

FIG. 6 is a diagram illustrating a lens module according to another embodiment of the present disclosure.

Throughout the drawings and the detailed description, the same reference numerals refer to the same elements. The drawings may not be to scale, and the relative sizes, proportions, and depictions of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

As used herein, the term "and/or" includes any one and any combination of any two or more of the associated listed items.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer or section without departing from the teachings of the examples.

Spatially relative terms such as "above," "upper," "below," and "lower" may be used herein for ease of description to describe one element's relationship to another element as shown in the figures. Such spatially relative terms are intended to encompass different orientations of the device in use or operation in addition to the orientation depicted in the figures. For example, if the device in the figures is turned over, an element described as being "above" or "upper" relative to another element will then be "below" or "lower" relative to the other element. Thus, the term "above" encompasses both the above and below orientations depending on the spatial orientation of the device. The device may also be oriented in other ways (for example, rotated by 90 degrees or at other orientations), and the spatially relative terms used herein are to be interpreted accordingly.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

In the structural views of the optical imaging systems in the drawings, the thickness, size, and shape of the lenses may be somewhat exaggerated for ease of description, and specifically, the shape of a spherical or non-spherical surface shown in the structural views is only presented as an example, but is not limited thereto.

A lens according to a first embodiment may be configured to have a refractive power. For example, a lens may include a lens unit having a refractive power. The lens unit may be configured to have a specific refractive power. For example, a lens unit may have a positive or a negative refractive power. Either one or both of an object-side surface and an image-side surface of the lens unit may be convex or concave. For example, the object-side surface of the lens unit may be convex. As another example, the image-side surface of the lens unit may be concave.

The lens according to the first embodiment may be configured to block light of a specific wavelength. For example, a lens according to an embodiment may be configured to block ultraviolet rays. However, the lens according to an embodiment may not be configured to block only ultraviolet rays. For example, the lens according to an embodiment may be configured to block both ultraviolet rays and infrared rays. To this end, a lens according to an embodiment may include a first coating layer and a second coating layer. The first coating layer and the second coating layer may be formed on the lens unit and may be arranged in a predetermined order in the optical axis direction. According to the present invention, the first coating layer and the second coating layer are alternately disposed in the optical axis direction.

The first coating layer and the second coating layer may have different refractive indices. For example, a refractive index of the first coating layer may be greater than a refractive index of the second coating layer. As another example, a refractive index of the first coating layer may be greater than a refractive index of the lens unit, and a refractive index of the second coating layer may be smaller than a refractive index of the lens unit.

A lens according to a second embodiment may include a lens unit having a refractive power and a plurality of coating layers formed on the lens unit. In the lens according to the second embodiment, the plurality of coating layers may include a first coating layer and a second coating layer having different thicknesses. For example, a first average thickness of the first coating layer may be smaller than a second average thickness of the second coating layer. As another example, a first maximum thickness of the first coating layer may be smaller than a second maximum thickness of the second coating layer, and may be larger than a second minimum thickness of the second coating layer. As another example, a first total thickness of the first coating layer may be smaller than a second total thickness of the second coating layer.

A lens according to a third embodiment may include a first coating layer and a second coating layer having different refractive indices. In the lens according to the third embodiment, a refractive index of the first coating layer may be greater than a refractive index of the second coating layer. In the lens according to the third embodiment, the first coating layer and the second coating layer may be alternately stacked on either one or both of an object-side surface and an image-side surface of the lens. For example, the first coating layer and the second coating layer may be repeatedly formed on the object-side surface of the lens in the order of the first coating layer and the second coating layer. In the lens according to the third embodiment, the thickness of the first coating layer may be smaller than the thickness of the nearest adjacent second coating layer. For example, a thickness of the first coating layer formed on an object-side surface of the lens may be smaller than a thickness of the second coating layer formed immediately above the first coating layer. As another example, a thickness of the first coating layer formed between the second coating layers may be smaller than a thickness of the second coating layer formed closest to upper and lower portions of the first coating layer.

A lens according to the fourth embodiment may include a first coating layer and a second coating layer having different refractive indices. For example, in the lens according to the fourth embodiment, a refractive index of the first coating layer may be 2.0 or more, and a refractive index of the second coating layer may be less than 1.5. A lens according to the fourth embodiment may be made of a material having a high refractive index. For example, a lens according to the fourth embodiment may be made of a glass material.

The lens module in an embodiment may include one or more lenses (hereinafter, referred to as coated lenses) according to the first to fourth embodiments. For example, the lens module in an embodiment may include a coated lens according to the first embodiment. As another example, the lens module in an embodiment may include a coated lens according to the second embodiment. As another example, the lens module in an embodiment may include a coated lens according to the first embodiment and a coated lens according to the third embodiment.

The lens module in an embodiment may include a plurality of lenses. For example, the lens module in an embodiment may include a first lens, a second lens, a third lens, and a fourth lens sequentially disposed in ascending numerical order along an optical axis from an object side of the lens module toward an image side of the lens module. Among the first lenses to fourth lenses, the first lens disposed nearest to an object (a forwardmost lens) may be a coated lens described in the first to fourth embodiments. However, a position of the coated lens in the first to fourth embodiments is not limited to the forwardmost lens (the first lens). For example, the second lens disposed closest to the image side of the forwardmost lens (the first lens) may be a coated lens described in the first to fourth embodiments. As another example, among the first lens to fourth lens, a lens disposed closest to an object side or an image side of a stop may be a coated lens described in the first to fourth embodiments.

The lens module in an embodiment may include a lens made of a glass material. For example, among the first lens to fourth lenses sequentially disposed in ascending numerical order from the object side of the lens module toward the image side of the lens module, the first lens disposed at the forwardmost side of the lens module may be a coated lens described in the first to fourth embodiments and may be made of a glass material. As another example, the second lens may be a coated lens described in the first to fourth embodiments and may be made of a glass material.

The lens module in an embodiment may include a lens made of a plastic material to facilitate lightweightedness and miniaturization. For example, one or more of the lenses arranged on an image side of the coated lens described in the first to fourth embodiments may be made of a plastic material. As another example, all of the lenses disposed on the image side of the coated lens described in the first to fourth embodiments may be made of a plastic material.

Hereinafter, various embodiments will be described in greater detail with reference to the drawings.

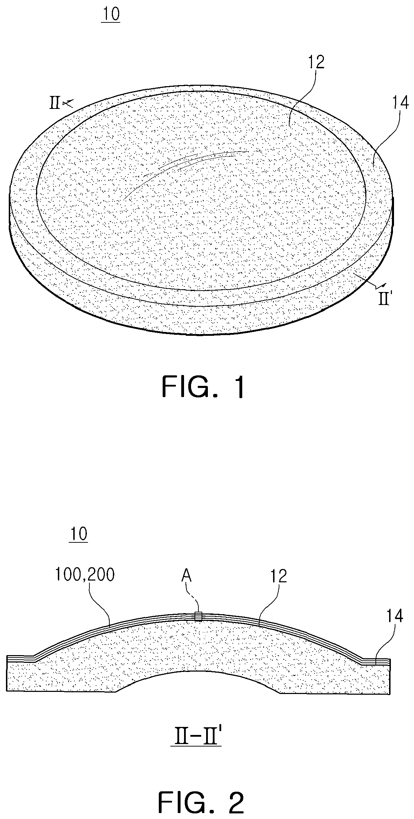

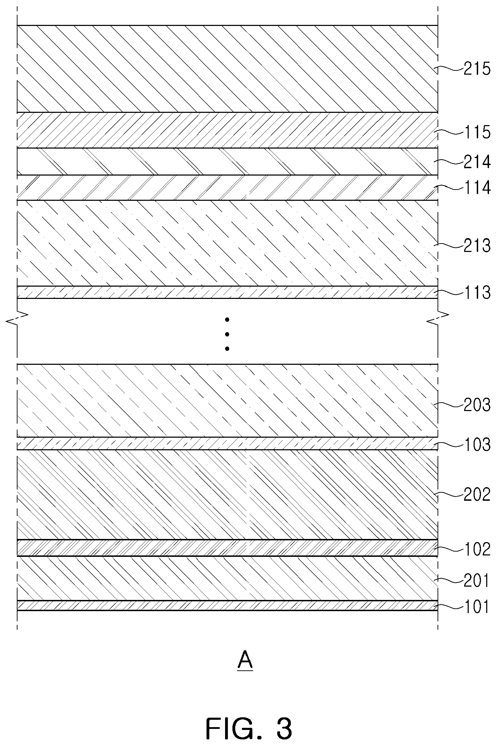

FIG. 1 is a perspective diagram illustrating a lens according to an embodiment of the present disclosure. FIG. 2 is a cross-sectional diagram illustrating a lens illustrated in FIG. 1 taken along the line II-II' in FIG. 1. FIG. 3 is an enlarged cross-sectional diagram illustrating portion A illustrated in FIG. 2.

Referring to FIG. 1, a lens 10 in an embodiment may be configured to have a refractive power. For example, the lens 10 may have a positive refractive power or a negative refractive power. The lens 10 may include a lens unit 12 and a flange portion 14. The lens unit 12 may be a region having a refractive power and transmitting effective light around an optical axis of the lens 10, and the flange portion 14 may be a region formed around the lens unit 12 and configured to not transmit effective light.

The lens 10 may be made of a material resistant against external impacts and temperature changes. For example, the lens 10 may be made of a glass material having a high refractive index and a high Abbe number.

The lens 10 may be configured to block or reflect light of a specific wavelength. For example, the lens 10 may be configured to block ultraviolet rays. To this end, the lens 10 may include a component for blocking ultraviolet rays. For example, the lens 10 may include a first coating layer 100 and a second coating layer 200.

The first coating layer 100 and the second coating layer 200 may be formed on either one of both of an object-side surface and an image-side surface of the lens 10. For example, the first coating layer 100 and the second coating layer 200 may be formed on both of an object-side surface and an image-side surface of the lens unit 12. As another example, the first coating layer 100 and the second coating layer 200 may be formed on either an object-side surface or an image-side surface of the lens unit 12.

The first coating layer 100 and the second coating layer 200 may be sequentially (or alternately) formed in one direction and may include 10 to 30 coating layers formed on one surface of the lens 10. For example, as illustrated in FIG. 3, a first coating layer 101, a second coating layer 201, a first coating layer 102, a second coating layer 202, a first coating layer 103, a second coating layer 203, . . . , a first coating layer 113, a second coating layer 213, a first coating layer 114, a second coating layer 214, a first coating layer 115, and a second coating layer 215 for a total of 30 coating layers may be formed on the object-side surface of the lens unit 12.

The first coating layer 100 and the second coating layer 200 may be configured to have different refractive indices. For example, a refractive index of the first coating layer 100 may be 2.0 or more, and a refractive index of the second coating layer 200 may be 1.5 or less. As another example, a refractive index of the first coating layer 100 may be 2.0 to 2.7, and a refractive index of the second coating layer 200 may be 1.01 to 1.50. As another example, a refractive index of the first coating layer 100 may be greater than a refractive index of the lens 10 or lens unit 12, and a refractive index of the second coating layer 200 may be greater than a refractive index of the lens 10 or lens unit 12.

The first coating layer 100 and the second coating layer 200 may be configured to have different Abbe numbers. For example, an Abbe number of the first coating layer 100 may be less than 40, and an Abbe number of the second coating layer 200 may be 50 or more. Preferably, an Abbe number of the first coating layer 100 may be less than 20, and an Abbe number of the second coating layer 200 may be 70 or more.

Each of the first coating layer 100 and the second coating layer 200 may be made of a single material or a plurality of materials. For example, the first coating layer 100 may be made of a single material including only one of $TiO_2$, $Ti_3O_5$, and $Si_3N_4$, or a plurality of materials including any combination of any two or more of $TiO_2$, $Ti_3O_5$, and $Si_3N_4$. As another example, the second coating layer 200 may be made of a single material including only one of $SiO_2$ and $Al_2O_3$, or a plurality of materials including $SiO_2$ and $Al_2O_3$.

For example, the first coating layer 100 may be made of a single material including only $TiO_2$, and the second coating layer 200 may be made of a single material including only $SiO_2$ (see Table 2 below).

As another example, the first coating layer 100 may be made of a single material including only $Ti_3O_5$, and the second coating layer 200 may be made of a single material including only $SiO_2$ (see Table 3 below).

As another example, the first coating layer 100 may be made of a single material including only $Si_3N_4$, and the second coating layer 200 may be made of a single material including only $SiO_2$ (see Table 4 below).

As another example, the first coating layer 100 may be made of a single material including only $TiO_2$, and the second coating layer 200 may be made of a plurality of materials including $SiO_2$ and $Al_2O_3$ (see Table 5 below).

Table 1 below illustrates refractive indices and Abbe numbers of materials that may be included in the first coating layer 100 and the second coating layer 200.

Table 1

| Material | Refractive Index | | | Abbe Number |
|---|---|---|---|---|
| | nd | nF | nC | |
| | 587.6 nm | 486.134 nm | 656.281 nm | |
| $TiO_2$ (bulk) | 2.614 | 2.735 | 2.571 | 9.84 |
| $TiO_2$ (film) | 2.146 | 2.209 | 2.123 | 13.36 |
| $SiO_2$ (film) | 1.473 | 1.478 | 1.472 | 73.97 |
| $Al_2O_3$ (film) | 1.68 | 1.688 | 1.676 | 57.14 |
| $Si_3N_4$ (film) | 2.025 | 2.045 | 2.016 | 36.08 |
| $Ti_3O_5$ (film) | 2.467 | 2.583 | 2.425 | 9.28 |

In Table 1, nd, nF, and nC are the refractive indices of the material at the wavelengths of the Fraunhofer d, F, and C spectral lines (587.6 nm, 486.134 nm, and 656.281 nm, respectively).

Tables 2 to 5 below are examples of coating layers formed on one surface of lens 10.

For reference, in Tables 2 to 4, the odd-numbered layers (1, 3, 5, ...) are the first coating layer 100, and the even-numbered layers (2, 4, 8, ...) are the second coating layer 200. In Table 5, the layers 1, 3, 5, 9, 11, and 14 are the first coating layer 100, and the layers 2, 4, 6, 7, 8, 10, 12, 13, 15 and 16 are the second coating layer 200.

For reference, in Tables 2 to 5, the total number of layers in the first coating layer 100 and the second coating layer 200 are 16 to 22 layers, but the total number of layers in the first coating layer 100 and the second coating layer 200 is not limited to 16 to 22 layers. According to the present invention, the total number of layers in the first coating layer 100 and the second coating layer 200 is from 10 to 30 layers.

Table 2

| Layer | Material |
|---|---|
| 18 | $SiO_2$ |
| 17 | $TiO_2$ |
| 16 | $SiO_2$ |
| 15 | $TiO_2$ |
| 14 | $SiO_2$ |
| 13 | $TiO_2$ |
| 12 | $SiO_2$ |
| 11 | $TiO_2$ |
| 10 | $SiO_2$ |
| 9 | $TiO_2$ |
| 8 | $SiO_2$ |
| 7 | $TiO_2$ |
| 6 | $SiO_2$ |
| 5 | $TiO_2$ |
| 4 | $SiO_2$ |
| 3 | $TiO_2$ |
| 2 | $SiO_2$ |
| 1 | $TiO_2$ |
| Base | Glass |

Table 3

| Layer | Material |
|---|---|
| 22 | $SiO_2$ |
| 21 | $Ti_3O_5$ |
| 20 | $SiO_2$ |
| 19 | $Ti_3O_5$ |
| 18 | $SiO_2$ |
| 17 | $Ti_3O_5$ |
| 16 | $SiO_2$ |
| 15 | $Ti_3O_5$ |
| 14 | $SiO_2$ |
| 13 | $Ti_3O_5$ |
| 12 | $SiO_2$ |
| 11 | $Ti_3O_5$ |
| 10 | $SiO_2$ |
| 9 | $Ti_3O_5$ |
| 8 | $SiO_2$ |

(continued)

| Layer | Material |
|-------|----------|
| 7 | $Ti_3O_5$ |
| 6 | $SiO_2$ |
| 5 | $Ti_3O_5$ |
| 4 | $SiO_2$ |
| 3 | $Ti_3O_5$ |
| 2 | $SiO_2$ |
| 1 | $Ti_3O_5$ |
| Base | Glass |

Table 4

| Layer | Material |
|-------|----------|
| 22 | $SiO_2$ |
| 21 | $Si_3N_4$ |
| 20 | $SiO_2$ |
| 19 | $Si_3N_4$ |
| 18 | $SiO_2$ |
| 17 | $Si_3N_4$ |
| 16 | $SiO_2$ |
| 15 | $Si_3N_4$ |
| 14 | $SiO_2$ |
| 13 | $Si_3N_4$ |
| 12 | $SiO_2$ |
| 11 | $Si_3N_4$ |
| 10 | $SiO_2$ |
| 9 | $Si_3N_4$ |
| 8 | $SiO_2$ |
| 7 | $Si_3N_4$ |
| 6 | $SiO_2$ |
| 5 | $Si_3N_4$ |
| 4 | $SiO_2$ |
| 3 | $Si_3N_4$ |
| 2 | $SiO_2$ |
| 1 | $Si_3N_4$ |
| Base | Glass |

Table 5

| Layer | Material |
|-------|----------|
| 16 | $Al_2O_3$ |
| 15 | $SiO_2$ |
| 14 | $TiO_2$ |

(continued)

| Layer | Material |
|-------|----------|
| 13 | $SiO_2$ |
| 12 | $Al_2O_3$ |
| 11 | $TiO_2$ |
| 10 | $SiO_2$ |
| 9 | $TiO_2$ |
| 8 | $SiO_2$ |
| 7 | $Al_2O_3$ |
| 6 | $SiO_2$ |
| 5 | $TiO_2$ |
| 4 | $SiO_2$ |
| 3 | $TiO_2$ |
| 2 | $SiO_2$ |
| 1 | $TiO_2$ |
| Base | Glass |

The first coating layer 100 and the second coating layer 200 may be formed to have different thicknesses. For example, a thickness of the first coating layer 100 may be smaller than a thickness of the second coating layer 200. More specifically, a total thickness T1sum of all of the layers of the first coating layer 100 formed on one surface of the lens 10 and a total thickness T2sum of all of the layers of the second coating layer 200 formed on the same surface of the lens 10 may satisfy any one or any combination of any two or more of the conditional expressions below

$$T1sum < T2sum \qquad \text{(Conditional Expression 1)}$$

$$0.2000 \leq (T1sum/T2sum) \leq 0.3000 \qquad \text{(Conditional Expression 2)}$$

$$0.1900 < T1sum/(T1sum+T2sum) < 0.2100 \qquad \text{(Conditional Expression 3)}$$

Table 6 illustrates a distribution of thicknesses of the layers of the first coating layer 100 and the layers of the second coating layer 200 formed on one surface of the lens 10.

Table 6

| Layer | Material | Example 1 Thickness (nm) | Example 2 Thickness (nm) | Example 3 Thickness (nm) |
|-------|----------|--------------------------|--------------------------|--------------------------|
| 18 | $SiO_2$ | 105 | 101 | 97 |
| 17 | $TiO_2$ | 43 | 46 | 41 |
| 16 | $SiO_2$ | 33 | 32 | 32 |
| 15 | $TiO_2$ | 30 | 29 | 28 |
| 14 | $SiO_2$ | 103 | 99 | 98 |
| 13 | $TiO_2$ | 15 | 13 | 16 |
| 12 | $SiO_2$ | 79 | 79 | 75 |
| 11 | $TiO_2$ | 24 | 23 | 22 |
| 10 | $SiO_2$ | 97 | 95 | 93 |
| 9 | $TiO_2$ | 15 | 16 | 15 |
| 8 | $SiO_2$ | 98 | 96 | 90 |

(continued)

| Layer | Material | Example 1 Thickness (nm) | Example 2 Thickness (nm) | Example 3 Thickness (nm) |
|---|---|---|---|---|
| 7 | $TiO_2$ | 20 | 18 | 21 |
| 6 | $SiO_2$ | 88 | 86 | 83 |
| 5 | $TiO_2$ | 15 | 13 | 12 |
| 4 | $SiO_2$ | 109 | 101 | 99 |
| 3 | $TiO_2$ | 20 | 16 | 19 |
| 2 | $SiO_2$ | 53 | 52 | 49 |
| 1 | $TiO_2$ | 12 | 16 | 12 |
| Base | Glass | - | - | - |

Table 7 below shows the values of T1 sum, T2sum, T1sum+T2sum, T1sum/T2sum, and T1sum/(T1sum+T2-sum) in Examples 1-3 in Table 6.

Table 7

| Example | 1 | 2 | 3 |
|---|---|---|---|
| T1sum | 194 | 190 | 186 |
| T2sum | 765 | 741 | 716 |
| T1sum+T2sum | 959 | 931 | 902 |
| T1sum/T2sum | 0.2536 | 0.2564 | 0.2598 |
| T1sum/(T1sum+T2sum) | 0.2023 | 0.2041 | 0.2062 |

The layers of the first coating layer 100 and the layers of the second coating layer 200 may be formed to have different thicknesses as illustrated in Examples 1 to 3 in Table 6. For example, a thickness of the layer of the first coating layer 100 forming the first layer and a thickness of the layer of the first coating layer 100 forming the third layer may be different from each other, and a thickness of the layer of the second coating layer 100 forming the second layer and a thickness of the layer of the second coating layer 100 forming the fourth layer may be different from each other.

As another example, the layers of the first coating layer 100 forming the first layer, the third layer, the fifth layer, and the seventh layer may be formed to have different thicknesses. As another example, the layers of the second coating layer 200 forming the second layer, the fourth layer, the sixth layer, the eighth layer, the tenth layer, the twelfth layer, the fourteenth layer, the sixteenth layer, and the eighteenth layer may be formed to have different thicknesses.

However, not all of the layers of the first coating layer 100 and the second coating layer 200 may be formed to have different thicknesses. For example, the layers of the first coating layer 100 forming the first layer and the fifth layer may be formed to have the same thickness (see Example 3 in Table 6), or the layers of the first coating layer 100 forming the first layer, the third layer, and the ninth layer may be formed to have the same thickness (see Example 2 in Table 6).

For reference, although not illustrated in the drawings, an antireflection layer may be formed on either one or both of the object-side surface and the image-side surface of the lens 10. For example, an antireflection layer may be formed on the second coating layer 200.

The lens 10 configured as described above may block light (e.g., ultraviolet rays) of a specific wavelength that may impair resolution, degrade the plastic lens, or significantly reduce the amount of incident light.

A lens module including a lens (hereinafter, referred to as a coated lens) according to the above-described embodiment will now be described.

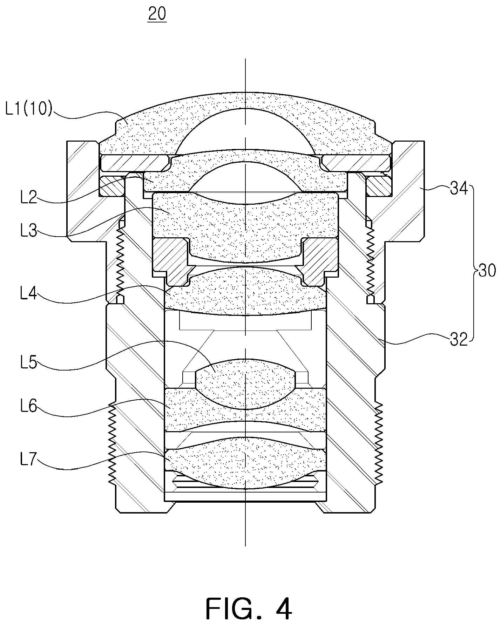

FIG. 4 is a diagram illustrating a lens module according to an embodiment of the present disclosure.

Referring to FIG. 4, a lens module 20 according to an embodiment may include a lens barrel 30 and lenses L1, L2, L3, L4, L5, L6, and L7. However, the components of the lens module 20 are not limited to the lens barrel 30 and the lenses L1, L2, L3, L4, L5, L6, and L7. For example, the lens module 20 may further include spacers disposed between the lenses L1, L2, L3, L4, L5, L6, and L7 to maintain predetermined spacings between the lenses L1, L2, L3, L4, L5, L6, and L7. Furthermore, the lens module 20 may further include one or more stops disposed in the lens barrel 30.

The lens barrel 30 may be configured to accommodate one or more of the lenses L1, L2, L3, L4, L5, L6, and L7. For example, the lens barrel 30 may be configured to accommodate all of the lenses L1, L2, L3, L4, L5, L6, and L7 sequentially disposed in ascending numerical order along an optical axis of the lens module 20 from an object side of the lens module 20 toward an image side of the lens module 20.

The lens barrel 30 may include a plurality of barrel members. For example, the lens barrel 30 may include a first barrel member 32 configured to accommodate the first lens L1, and a second barrel member 34 configured to accommodate the second lens L2 to the seventh lens L7. The first barrel member 32 and the second barrel member 34 may be firmly coupled to each other by an interference fit or screw fastening.

Each of the lenses L1, L2, L3, L4, L5, L6, and L7 may be configured to have a refractive power. For example, the first lens L1, the second lens L2, and the sixth lens L6 may be configured to have a negative refractive power, and the third lens L3 to the fifth lens L5 and the seventh lens L7 may be configured to have a positive refractive power. However, this is only an example, and the first lens L1 to the seventh lens L7 may be configured to have other combinations of refractive powers.

The lens module 20 according to an embodiment may include one or more coated lenses 10 described above with reference to FIGS. 1 to 3. For example, among the first lens L1 to the seventh lens L7, the first lens L1 disposed at the forwardmost side of the lens module 20 may be the coated lens 10 described above with reference to FIGS. 1 to 3.

The lens module 20 may include one or more glass lenses and one or more plastic lenses. For example, the first lens L1 disposed at the forwardmost side of the lens module may be made of a glass material, and the second lens L2 to the seventh lens L7 may be made of a plastic material.

Since ultraviolet rays are blocked by the first lens L1 disposed at the forwardmost side of the lens module 20 configured as described above, deterioration of the second lens L2 to the seventh lens L7 made of a plastic material may be significantly reduced. Also, in the lens module 20 according to the embodiment, since external radiant heat is substantially blocked by the coated lens 10 constituting the first lens L1, deformation of the plastic lenses L2, L3, L4, L5, L6, and L7 and changes in optical characteristics of the plastic lenses L2, L3, L4, L5, L6, and L7 due to heat may be reduced. Accordingly, the lens module 20 according to the embodiment may achieve a high resolution even under adverse conditions.

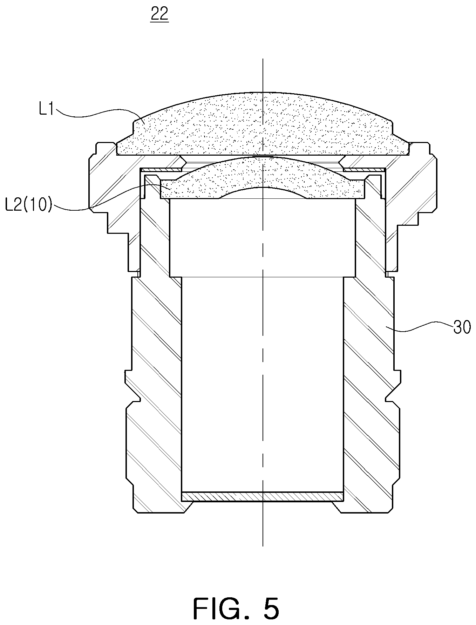

FIG. 5 is a diagram illustrating a lens module according to another embodiment of the present disclosure.

Referring to FIG. 5, a lens module 22 according to another embodiment may include a lens barrel 30 and lenses L1 and L2. However, the components of the lens module 22 are not limited to the lens barrel 30 and the lenses L1 and L2. For example, the lens module 22 may further include a spacer disposed between the lenses L1 and L2 to maintain a predetermined spacing between the lenses L1 and L2. Furthermore, the lens module 22 may further include one or more stops disposed in the lens barrel 30.

The lens barrel 30 may be configured to accommodate one or more of the lenses L1 and L2. For example, the lens barrel 30 may be configured to accommodate the first lens L1 and the second lens L2 sequentially disposed in ascending numerical order along an optical axis of the lens module 22 from an object side of the lens module 22 toward an image side of the lens module 22.

The lens module 22 according to the embodiment may include one or more coated lenses 10 described above with reference to FIGS. 1 to 3. For example, among the first lens L1 and the second lens L2, the second lens L2 may be the coated lens 10 described above with reference to FIGS. 1 to 3.

The lens module 22 may include one or more glass lenses. For example, both the first lens L1 and the second lens L2 may be made of a glass material.

Since ultraviolet rays are blocked by the second lens L2 in the lens module 22 configured as described above, deterioration of electronic components vulnerable to ultraviolet rays may be reduced.

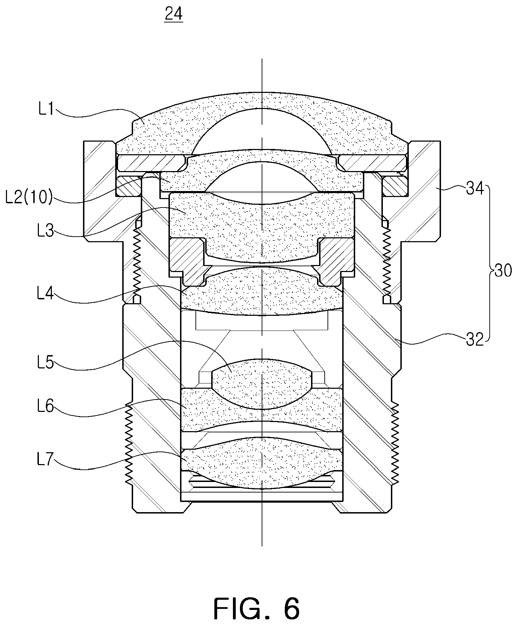

FIG. 6 is a diagram illustrating a lens module according to another embodiment of the present disclosure.

Referring to FIG. 6, a lens module 24 according to another embodiment may include a lens barrel 30 and a plurality of lenses L1, L2, L3, L4, L5, L6, and L7. However, the components of the lens module 24 are not limited to the lens barrel 30 and the lenses L1, L2, L3, L4, L5, L6, and L7. For example, the lens module 24 may further include spacers disposed between the lenses L1, L2, L3, L4, L5, L6, and L7 to maintain predetermined spacings between the lenses L1, L2, L3, L4, L5, L6, and L7. Furthermore, the lens module 24 may further include one or more stops disposed in the lens barrel 30.

The lens barrel 30 may be configured to accommodate one or more lenses L1, L2, L3, L4, L5, L6, and L7. For example, the lens barrel 30 may be configured to accommodate all of the lenses L1, L2, L3, L4, L5, L6, and L7 sequentially disposed in ascending numerical order along an optical axis of the lens module 24 from an object side of the lens module 24 toward an image side of the lens module 24.

The lens barrel 30 may include a plurality of barrel members. For example, the lens barrel 30 may include a first barrel member 32 configured to accommodate the first lens L1 and a second barrel member 34 configured to accommodate the second lens L2 to the seventh lens L7. The first barrel member 32 and the second barrel member 34 may be firmly coupled to each other by an interference fit or screw fastening.

The lens module 24 according to the embodiment may include one or more coated lenses 10 described above with reference to FIGS. 1 to 3. For example, the second lens L2 of the first lens L1 to the seventh lens L7 may be the coated lens 10 described above with reference to FIGS. 1 to 3.

The lens module 24 may include one or more glass lenses and one or more plastic lenses. For example, the first lens L1 and the second lens L2 may be made of a glass material, and the third lens L3 to the seventh lens L7 may be made of a plastic material.

Since ultraviolet rays may be blocked by the second lens L2 disposed in the lens module 24 configured as described above, deterioration of the third lens L3 to the seventh lens L7 made of a plastic material may be significantly reduced. Also, in the lens module 24 according to the embodiment, since the first lens L1 is disposed on the object side of the second lens constituted by the coated lens 10, the first coating layer 100 and the second coating layer 200 of the coated lens 10 may be prevented from being damaged or detached due to external impacts.

According to the aforementioned embodiments, a lens in an embodiment may reduce deterioration caused by ultraviolet rays.

Also, since the lens module in an embodiment may include one or more plastic lenses protected from deterioration, the number of glass lenses, which may be expensive and difficult to manufacture, may be significantly reduced.

While this disclosure includes specific examples, it will be apparent after an understanding of the disclosure of this application that various changes in form and details may be made in these examples without departing from the scope of the claims. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the invention is defined not by the detailed description, but by the enclosed claims.

## Claims

1. A lens comprising:

   a lens unit (12) having a refractive power; and
   a first coating layer (100) and a second coating layer (200) formed on either one or both of an object-side surface and an image-side surface of the lens unit (12) in an optical axis direction of the lens unit (12),
   wherein a total number of the coating layers of the first coating layer (100) and the coating layers of the second coating layer (200) is in a range of 10 to 30 coating layers,
   wherein the first coating layer (100) and the second coating layer (200) are alternately disposed in the optical axis direction of the lens unit (12),
   wherein a first refractive index of the first coating layer (100) is greater than a second refractive index of the second coating layer (200), and
   **characterized in that**
   the following conditional expression is satisfied:

   $$0.1900 < T1sum/(T1sum+T2sum) < 0.2100 \,,$$

   where T1sum is a total thickness of the first coating layer (100), and T2sum is a total thickness of the second coating layer (200).

2. The lens of claim 1, wherein the first refractive index is greater than a refractive index of the lens unit (12).

3. The lens of claim 1, wherein the second refractive index is smaller than a refractive index of the lens unit (12).

4. The lens of claim 1, wherein the first refractive index is in a range of 2.0 to 2.7.

5. The lens of claim 1, wherein the second refractive index is in a range of 1.01 to 1.50.

6. The lens of claim 1, wherein the first coating layer (100) is made of a material comprising any one or any combination of any two or more of $TiO_2$, $Ti_3O_5$, and $Si_3N_4$.

7. The lens of claim 1, wherein the second coating layer (200) is made of a material comprising either one or both of $SiO_2$ and $Al_2O_3$.

8. The lens of claim 1, wherein the following conditional expression is satisfied:

T1sum < T2sum.

9. The lens of claim 1, wherein the following conditional expression is satisfied:
0.2000 ≤ T1sum/T2sum ≤ 0.3000.

10. A lens module comprising the lens of claim 1.

11. The lens module of claim 10, further comprising a rear lens group disposed on an image side of the lens.

12. The lens module of claim 11, wherein the rear lens group comprises one or more plastic lenses.


**Patentansprüche**

1. Linse, umfassend:

eine Linseneinheit (12) mit einer Brechkraft; und
eine erste Beschichtungsschicht (100) und eine zweite Beschichtungsschicht (200), die entweder auf einer objektseitigen Oberfläche oder einer bildseitigen Oberfläche der Linseneinheit (12) oder auf beiden in Richtung der optischen Achse der Linseneinheit (12) ausgebildet sind,
wobei eine Gesamtzahl der Beschichtungsschichten der ersten Beschichtungsschicht (100) und der Beschichtungsschichten der zweiten Beschichtungsschicht (200) in einem Bereich von 10 bis 30 Beschichtungsschichten liegt,
wobei die erste Beschichtungsschicht (100) und die zweite Beschichtungsschicht (200) abwechselnd in der Richtung der optischen Achse der Linseneinheit (12) angeordnet sind,
wobei ein erster Brechungsindex der ersten Beschichtungsschicht (100) größer ist als ein zweiter Brechungsindex der zweiten Beschichtungsschicht (200), und
**dadurch gekennzeichnet, dass**
der folgende bedingte Ausdruck erfüllt ist:

$$0{,}1900 < T1sum/(T1sum+T2sum) < 0{,}2100 \; ,$$

wobei T1sum eine Gesamtdicke der ersten Beschichtungsschicht (100) und T2sum eine Gesamtdicke der zweiten Beschichtungsschicht (200) ist.

2. Linse nach Anspruch 1, wobei der erste Brechungsindex größer als ein Brechungsindex der Linseneinheit (12) ist.

3. Linse nach Anspruch 1, wobei der zweite Brechungsindex kleiner als ein Brechungsindex der Linseneinheit (12) ist.

4. Linse nach Anspruch 1, wobei der erste Brechungsindex in einem Bereich von 2,0 bis 2,7 liegt.

5. Linse nach Anspruch 1, wobei der zweite Brechungsindex in einem Bereich von 1,01 bis 1,50 liegt.

6. Linse nach Anspruch 1, wobei die erste Beschichtungsschicht (100) aus einem Material hergestellt ist, das eines oder eine Kombination von zwei oder mehr der Elemente Ti02, Ti305 und Si3N4 umfasst.

7. Linse nach Anspruch 1, wobei die zweite Beschichtungsschicht (200) aus einem Material hergestellt ist, das entweder Si02 oder Al2O3 oder beides umfasst.

8. Linse nach Anspruch 1, wobei der folgende bedingte Ausdruck erfüllt ist:
T1sum < T2sum.

9. Linse nach Anspruch 1, wobei der folgende bedingte Ausdruck erfüllt ist:
0,2000 < T1sum/T2sum < 0,3000.

**10.** Linsenmodul, das die Linse nach Anspruch 1 umfasst.

**11.** Linsenmodul nach Anspruch 10, des Weiteren umfassend eine hintere Linsengruppe, die auf einer Bildseite der Linse angeordnet ist.

**12.** Linsenmodul nach Anspruch 11, wobei die hintere Linsengruppe eine oder mehrere Kunststofflinsen umfasst.

**Revendications**

**1.** Lentille comprenant :

une unité de lentille (12) ayant une puissance réfractive ; et
une première couche de revêtement (100) et une seconde couche de revêtement (200) formées sur l'une, ou sur les deux, d'une surface côté objet et d'une surface côté image de l'unité de lentille (12) dans une direction d'axe optique de l'unité de lentille (12),
dans laquelle un nombre total des couches de revêtement de la première couche de revêtement (100) et des couches de revêtement de la seconde couche de revêtement (200) est compris entre 10 et 30 couches de revêtement,
dans laquelle la première couche de revêtement (100) et la seconde couche de revêtement (200) sont disposées alternativement dans la direction d'axe optique de l'unité de lentille (12),
dans laquelle un premier indice de réfraction de la première couche de revêtement (100) est supérieur à un second indice de réfraction de la seconde couche de revêtement (200), et
**caractérisée en ce que** l'expression conditionnelle suivante est satisfaite :

$$0,1900 < T1sum/(T1sum+T2sum) < 0,2100,$$

où T1sum est une épaisseur totale de la première couche de revêtement (100), et T2sum est une épaisseur totale de la seconde couche de revêtement (200).

**2.** Lentille selon la revendication 1, dans laquelle le premier indice de réfraction est supérieur à un indice de réfraction de l'unité de lentille (12).

**3.** Lentille selon la revendication 1, dans laquelle le second indice de réfraction est inférieur à un indice de réfraction de l'unité de lentille (12).

**4.** Lentille selon la revendication 1, dans laquelle le premier indice de réfraction est compris entre 2,0 et 2,7.

**5.** Lentille selon la revendication 1, dans laquelle le second indice de réfraction est compris entre 1,01 et 1,50.

**6.** Lentille selon la revendication 1, dans laquelle la première couche de revêtement (100) est constituée d'un matériau comprenant l'un quelconque parmi TiO2, Ti305 et Si3N4, ou toute combinaison de deux quelconques ou plus de ceux-ci,.

**7.** Lentille selon la revendication 1, dans laquelle la seconde couche de revêtement (200) est constituée d'un matériau comprenant l'un ou les deux parmi SiO2 et Al2O3.

**8.** Lentille selon la revendication 1, dans laquelle l'expression conditionnelle suivante est satisfaite :
T1sum < T2sum.

**9.** Lentille selon la revendication 1, dans laquelle l'expression conditionnelle suivante est satisfaite :
$0,2000 \leq T1sum/T2sum \leq 0,3000$.

**10.** Module de lentilles comprenant la lentille selon la revendication 1.

**11.** Module de lentilles selon la revendication 10, comprenant en outre un groupe de lentille arrière disposé sur un côté image de la lentille.

**12.** Module de lentilles selon la revendication 11, dans lequel le groupe de lentille arrière comprend une ou plusieurs lentilles en matière plastique.

10

12

II

14

II'

FIG. 1

10

100,200    A    12

14

II-II'

FIG. 2

A

FIG. 3

FIG. 4

FIG. 5

EP 4 332 641 B1

FIG. 6

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005195503 A1
- US 2012188647 A1

- CN 122144389 A